# EUROPEAN PATENT APPLICATION

(11) **EP 4 160 513 A1**
(43) Date of publication of application: **05.04.2023**
(21) Application number: 22195827.5
(22) Date of filing: 15.09.2022
(51) Int. Cl.: G06Q 40/08

(54) **SYSTEM, METHOD AND APPARATUS FOR ENABLING ENHANCED CONSUMER ENGAGEMENT FOR PROVIDING ACCESS TO CREDIT FOR ONLINE PURCHASES**

(30) Priority: 29.09.2021 US 202117489293
(71) Applicant: Affirm, Inc., San Francisco, CA 94108 (US)
(72) Inventor: HUM, Emerson, San Francisco, 94108 (US); CHIEN, Jui-Chun, San Francisco, 94108 (US); LOPEZ, Emilio, San Francisco, 94108 (US); KANG, Han Yu, San Francisco, 94108 (US); ARSHONSKY, Robert, San Francisco, 94108 (US); KORUKONDA, Abhinay, San Francisco, 94108 (US); GEE, Christina, San Francisco, 94108 (US)
(74) Representative: Piotrowicz, Pawel Jan Andrzej

(57) **Abstract**

A method for employing a browser extension in relation to extending a financing offer to a user may include monitoring browser activity of a user via the browser extension responsive to loading a web page. The method may further include determining a merchant identity associated with an online product or service based on the browser activity, determining a preauthorized loan amount for the financing offer to the user based on the merchant identity, and displaying an interface element associated with the financing offer on the web page.

## Description

### TECHNICAL FIELD

Example embodiments generally relate to financial industry technologies and, in particular, relate to apparatuses, systems, and methods for enabling consumers to obtain credit in relation to purchasing goods or services online.

### BACKGROUND

The financial industry is comprised of many thousands of customers, vendors, lenders, borrowers, and other bit players that all interact in various ways to enable customers to ultimately have access to goods and services provided by the vendors. Credit and debit transactions have long been a way that individuals have managed point of sale transactions to ensure relatively seamless transfer of funds from customers, or on their behalf, to vendors for relatively routine or small transactions. Meanwhile, obtaining a loan from a bank has long been the most common way of obtaining financing for non-routine or larger transactions. More recently, buy now, pay later financing has become a popular option.

In many cases, a customer may interact with a vendor or lender to work through a transaction that ultimately provides the vendor with the necessary funds to complete the transaction. For online purchases, the workflow that is used to complete the transaction is almost always dictated precisely according to the payment methods that are outlined by the vendor on the checkout page of its website. This can often mean that certain options, such as the use of a credit card or other online payment options are the only available options to a consumer. Buy now, pay later, or other options that may be preferred by the customer, may therefore not be available at checkout. Customers may instead be required to conduct follow-on transactions to transfer balances to more preferred lending options, and the complications brought on by these additional steps may ultimately lead to some customers to exercise reluctance with regard to undertaking to purchase from vendors for which such coming complications can be foreseen. Accordingly, it may be desirable to provide customers with greater freedom to use the means of payment that are preferred at the point of sale.

### BRIEF SUMMARY OF SOME EXAMPLES

Accordingly, some example embodiments may enable the provision of technical means by which to provide a foundation for enabling improved payment options at (and on the way to) checkout.

In an example embodiment, a method for employing a browser extension in relation to extending a financing offer to a user may be provided. The method may include monitoring browser activity of a user via the browser extension responsive to loading a web page and determining a merchant identity associated with an online product or service based on the browser activity. The method may further include determining a preauthorized loan amount for the financing offer to the user based on the merchant identity, and displaying an interface element associated with the financing offer on the web page.

In another example embodiment, an apparatus for employing a browser extension in relation to extending a financing offer to a user may be provided. The apparatus may include processing circuitry configured for monitoring browser activity of a user via the browser extension responsive to loading a web page and determining a merchant identity associated with an online product or service based on the browser activity. The processing circuitry may be further configured for determining a preauthorized loan amount for the financing offer to the user based on the merchant identity, and displaying an interface element associated with the financing offer on the web page.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for employing a browser extension for extending credit for financial transactions at checkout according to an example embodiment;
FIG. 2 illustrates a functional block diagram of a credit extension platform according to an example embodiment;
FIG. 3 illustrates a functional block diagram of a device employing the browser extension according to an example embodiment;
FIG. 4 illustrates a control flow diagram showing an example of communications and activities associated with the browser extension operating in accordance with an example embodiment;
FIG. 5 illustrates a web page showing search results modified to include an interface element in accordance with an example embodiment;
FIG. 6 illustrates a web page corresponding to a product offered by a merchant and modified by operation of the browser extension in accordance with an example embodiment;
FIG. 7 illustrates a modification of a control console or interface that may lead to a checkout page in accordance with an example embodiment;
FIG. 8 illustrates a virtual card and usage of the virtual card at the checkout page in accordance with an example embodiment;
FIG. 9 illustrates a block diagram of a system in which a mobile application may be integrated into usage with the browser extension in accordance with an example embodiment; and
FIG. 10 illustrates a block diagram of a method of employing a browser extension in relation to extending a financing offer to a user in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

As noted above, the typical workflow for customer checkout is predetermined and limited by the modes of payment accepted by the vendor. In this regard, for example, the checkout page of the website of the vendor may provide a single option for payment by credit card. In some alternatives, a user may be offered or select a first type of financing option (e.g., a credit or debit card payment option) or a second type of financing option (e.g., an online payment service such as PayPal or the like). These options either require the customer to have funds immediately on-hand or, where credit is given, require the customer to accept the risk of paying relatively high interest on balances that are not immediately paid off.

Given the popularity of buy now, pay later financing, which may in many cases provide credit without compounding interest rates (or any interest charged in some cases), some customers may prefer to have the option to use a payment method that either is or at least is convertible to a buy now, pay later loan at checkout for online purchases. In this regard, even having the option to later convert one of the limited payment options provided at checkout to a buy now, pay later loan through follow-on transactions may present a certain amount of transactional friction that can dissuade the customer from moving forward with a purchase. This transactional friction serves none of the parties involved. The customer does not obtain the good or service desired, the vendor does not achieve a sale, and even the financing institutions that are otherwise made available to facilitate the transaction are denied another transaction.

Example embodiments may enable customers to ensure that they are able to avail themselves of desirable financing options (e.g., buy now, pay later financing), regardless of whether the vendors have such options available at their checkout pages. In this regard, example embodiments provide a browser extension that can be utilized by customers to provide desired or preferred financing options as an integrated option at checkout, even when the vendor does not otherwise typically provide such options. Moreover, example embodiments may further integrate the customer's preferred financing option into browsing or searching activities to enhance the customer's shopping experiences and opportunities beyond merely being an option at checkout. As such, example embodiments may enable customers to be made aware of opportunities in which the customers are likely to have an interest coupled with information regarding engaging the opportunities utilizing their preferred financing option (e.g., buy now, pay later financing).

By employing example embodiments, the transactional friction noted above may be removed, which may itself drive additional sales and satisfaction for both customers and vendors when customers are actively engaging a vendor for a product or service. Moreover, the ability of example embodiments to integrate into other activities (e.g., searching and browsing) may actually drive additional customer interest and further enhance the experiences and satisfaction of customers, while also driving increased sales for vendors. Thus, a win-win situation is created for customers and vendors without any need for the vendors to necessarily modify their checkout pages or otherwise alter the workflows associated with their websites.

Some example embodiments described herein provide for a credit extension platform that can be utilized in connection with a browser extension instantiated at an apparatus comprising configurable processing circuitry. The processing circuitry may be configured to execute various processing functions on financial data using the techniques described herein. The credit extension platform may, for example, be configured to provide a way to enable customers to checkout in a more flexible way that gives customers greater flexibility to choose between different types of financing options not necessarily provided directly by the vendor's checkout page. The increased flexibility provided to customers may translate into more access to credit, more active customers, and better conversion rates for vendors.

Example embodiments may be employed in connection with previously conducted underwriting decisions made prior to the customer's arrival at checkout or time of purchase. However, at least some of the decision making may be made at checkout, and in some cases information associated with obtaining a virtual card that can be used at checkout may be provided during the process leading up to checkout in various ways. In relation to underwriting decisions, macroeconomic conditions and seasonality may have an impact on the business of a financial institution or organization that offers the virtual card mentioned above. In response to these factors, and various tuning efforts that may normally be employed, a transactional credit model may utilize all inputs and factors to make a credit extension decision (i.e., whether to extend credit to the user to pay for a transaction) for a customer before the customer is at checkout, but integrate information that may be relevant to the vendor (or services/products of the vendor) into activities the customer engages in on the way to checkout. In this regard, the transactional credit model may determine an amount of credit to offer to the customer (or user) based on the credit score of the user, the identity of the vendor, and numerous other conventional factors that may or may not include specific records of past and recent transactions with a particular company in order to make the credit extension decision.

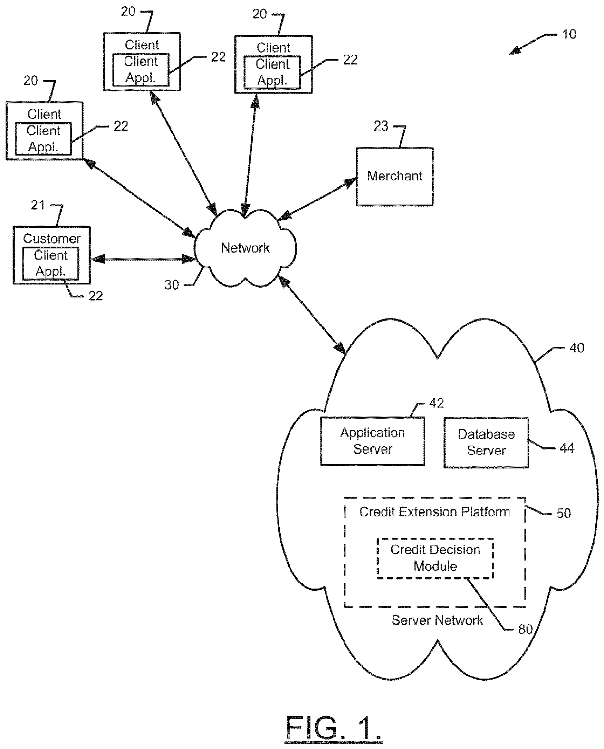

An example embodiment of the invention will now be described in reference to FIG. 1, which illustrates an example system in which an embodiment of the present invention may be employed. As shown in FIG. 1, a credit management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a vendor company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities. In the present example, one of the clients 20 may be specifically associated with a customer 21 and is therefore labeled as such. Meanwhile, another of the clients 20 may be associated with a vendor. However, in order to account for the possibility that the vendor may have no prior relationship with the system 10 (or the company or institution that instantiates the system 10), FIG. 1 illustrates more generally a merchant 23, which is a vendor that has its own computer, computing device, server, or other communication platform capable of interacting with the system 10.

Each one of the clients 20 (including the customer 21, and in some cases also the merchant 23) may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

In an example embodiment, the client application 22 may be embodied as a browser extension. As such, the client application 22 may be embodied as a software module (i.e., the browser extension) that is used to customize a web browser of the client 20. The customization may include, for example, modifications to the user interface of the web browser. The client application 22 may therefore include source code capable of altering browser settings, adding user interface items to web pages, or adding to/replacing website content on web pages. In some cases, the client application 22 may have access to browsing history or current/active searches conducted by the client 20.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include many different vendors (of which the merchant 23 is one example) and one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to credit extension platform 50, and more particularly relating to facilitating financial computations and calculations related to decisions associated with extensions of credit (e.g., loans where, for example, the loans may include a buy now, pay later loan, or other products associated with credit or lending transactions). For example, the application server 42 may be configured to provide (via the credit extension platform 50) execution of instructions, and storage of information descriptive of events or activities, associated with the credit extension platform 50 and the execution of a financial computations, calculations and modeling on behalf of a user of the system 10 located at one of the clients 20, or interacting with a user located at one of the clients 20, in real time. In some cases, the financial transaction may include obtaining buy now, pay later financing, and the activities associated therewith may include the provision of a loan/product application detailing information required by the lender (and operator of the credit extension platform 50) to determine whether credit, funds, or other products can be provided to the customer based on information provided in the loan/product application. However, example embodiments may also apply to other types of loans.

In some embodiments, the credit extension platform 50 may be a technical device, component or module affiliated with the lender or an agent of the lender. Thus, the credit extension platform 50 may operate under control of the lender or agent of the lender to be a technical means by which to carry out activities under direction of the lender/agent or employees thereof. As such, in some embodiments, the clients 20 may access the credit extension platform 50 services, and more particularly contact the credit extension platform 50 online and utilize the services provided thereby. However, it should be appreciated that in other embodiments, an application (e.g., the client application 22) enabling the clients 20 to interact with the credit extension platform 50 (or components thereof) may be provided from the application server 42 (e.g., via download over the network 30) to one or more of the clients 20 to enable recipient clients 20 to instantiate an instance of the client application 22 for local operation such that the credit extension platform 50 may be a distributor of software enabling individual users to utilize the credit extension platform 50. Alternatively, another distributor of the software may provide the client 20 with the client application 22, and the credit extension platform 50 may communicate with the client 20 (via the client application 22) after such download. In some examples, the client application 22 may be obtained from a web application store (e.g., Google's Chrome Web Store, or other similar web stores at which applications and browser extensions may be obtained).

In an example embodiment, the client application 22 may therefore include application programming interfaces (APIs) and other web interfaces to enable the client 20 to conduct operations as described herein via the credit extension platform 50 and/or via modification to websites and/or web pages associated with the merchant 23. The client application 22 may include source code for modifying the websites and/or web pages, and may also include links to a series of control consoles or web pages including a landing page, onboarding services, activity feed, account settings (e.g., user profile information), transaction management services, payment management services and the like in cooperation with a service application that may be executed at the credit extension platform 50. Thus, for example, the client application 22 may enable the user or operator (e.g., the customer 21) to connect with the credit extension platform 50 to articulate and submit queries, make credit extension requests, initiate and pay for transactions using funds associated with a credit extension request, and/or the like using the credit extension platform 50 in association with an account (e.g., a user account) that is associated with the customer 21.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the credit extension platform 50 configured to operate in accordance with an example embodiment of the present invention. In this regard, for example, the credit extension platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the credit extension platform 50. Thus, it should be appreciated that the functions of the credit extension platform 50 can be conducted via client-server based interactions involving communications between clients 20 and the server network 40.

As such, the environment of FIG. 1 illustrates an example in which provision of content and information associated with the financial industry may be accomplished by a particular entity (namely the credit extension platform 50 residing at the application server 42 or at one of the clients 20) via interaction with the client application 22. Thus, the credit extension platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the credit extension platform 50 may operate to enable the user associated with a given one of the clients 20 to setup an account (i.e., the user account) with an entity that operates the credit extension platform 50. After account setup, the user may initiate transactions with various vendors (including merchant 23) and fund the transactions via credit extended by the entity. Notably, account setup may occur prior to the user attempting to initiate any particular transaction, or may occur while the user is in the process of conducting a particular transaction. Thus, for example, the user may already have the user account prior to conducting transactions, or the user may setup the user account while conducting a transaction (or on the way to conducting a transaction).

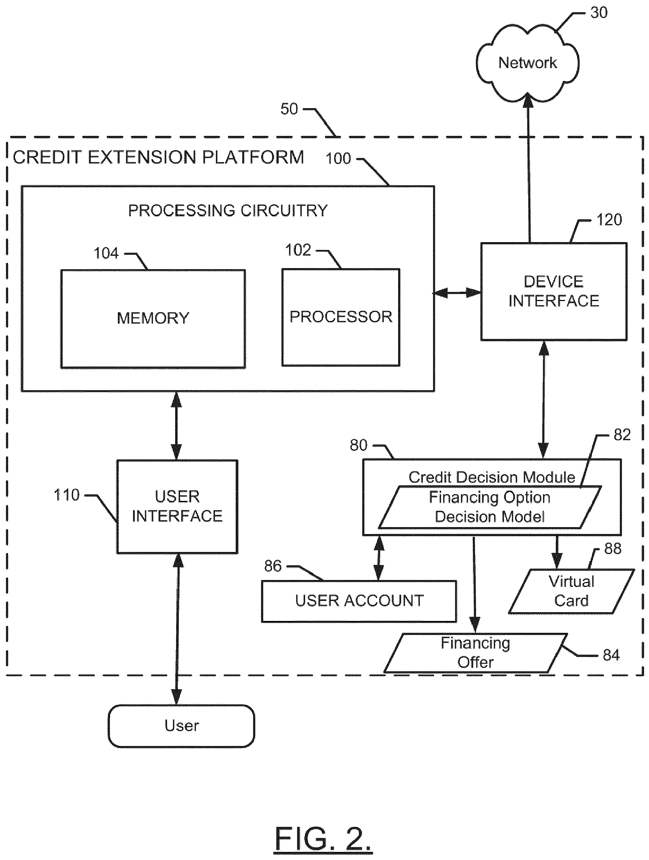

In an example embodiment, the credit extension platform 50 may enable the user to request an extension of credit, or accept an offer of the extension of credit, in connection with a transaction where the type of financing associated with the extension of credit may include, for example, a buy now, pay later loan. To accomplish this, the credit extension platform 50 of some example embodiments may conduct determinations regarding credit extension so that, for example, one or more offers of credit may be provided to the user at checkout (or on the way to checkout) via the browser extension (i.e., via the client application 22). As an example, prior to checkout (e.g., including in response to search activities, or browsing of web pages of the merchant 23), the credit extension platform 50 may make a determination as to the creditworthiness of the user and provide information indicating a financing offer (or credit offer) to the user that can be accepted either on the way to checkout or at checkout. The financing offer may be specific to, and generated based on, the merchant 23 (as described in greater detail in reference to FIG. 2 below).

In some example embodiments, a decision model may be provided to guide the ability of the credit extension platform 50 to make a credit extension decision regarding each individual customer (e.g., the customer 21) and/or vendor (e.g., the merchant 23). Example embodiments may also employ machine learning with respect to many different data points associated with the user, the vendor, the type of transaction, or many other pieces of relevant information. The use of machine learning may be tailored to providing the user with financing offers that include payment options that are most likely to be useful to the user.

In some cases, for example, the client application 22 may be used to engage (e.g., via a website and corresponding APIs) with the credit extension platform 50 to select individually available terms associated with a loan product that the user has an interest in employing for purchasing goods or services in connection with an online transaction. The credit extension platform 50 may then be leveraged to perform the analysis described above to determine which financing offers to present to the user for use at checkout. The financing offer may be accepted and a virtual card, or other purchasing vehicle, may be issued to the customer 21. At final checkout, the user (i.e., customer 21) may then be enabled to finalize the transaction using the virtual card or other purchasing vehicle.

Thus, for example, the credit extension platform 50 may effectively conduct a pre-approval of the customer 21 for a financing offer that is associated with (or determined at least in part based on) the vendor (i.e., the merchant 23). The customer 21 may, prior to checkout and/or at checkout, be made aware of the financing offer and various terms associated therewith and, by accepting the financing offer, be issued the virtual card. The virtual card may then be used at checkout to obtain the goods or services being purchased from the vendor with funds being provided (directly or indirectly) to the vendor by the entity associated with the credit extension platform 50, and a loan (e.g., a buy now, pay later loan) is then instantiated between the user and the entity in association with the user account.

As an alternative to the virtual card, as noted above, another purchasing vehicle may be employed. Alternative purchasing vehicles may take numerous forms. One example embodiment may instantiate the alternative purchasing vehicle in the form of an API that directly interfaces with a backend payment processing system of the merchant 23 to provide one-click checkout for the customer 21. In this regard, for example, the merchant 23 and the entity associated with the system 10 may be partners, or have a pre-existing agreement, that enables the merchant 23 to directly obtain payment from the entity responsive to extension of credit by the entity to the customer 21 based on the pre-approval of the customer 21 for the financing offer. The cart of the customer 21 may, e.g., with a single button or selectable interface element, be totaled and transferred to an installment loan with the entity, payment may be received by the merchant 23, and shipment initiated to the customer 21 with a single click or single interface element selection.

Regardless of how the queries, calculations or modeling activities are initiated, the credit extension platform 50 of FIG. 1 may be used to manage execution of such activities. Each of these activities may have its own respective timing and calculations and communications that are facilitated by the credit extension platform 50 and various components of the credit extension platform 50 may be conducted in parallel. The components, which may be functional modules that operate via API or function calls to respective segmented platforms or a monolith or other collection of rules, policies, instructions, or the like.

FIG. 2 shows certain elements of an apparatus for provision of the credit extension platform 50 or other processing circuitry according to an example embodiment.The apparatus of FIG. 2 may be employed, for example, as the credit extension platform 50 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the credit extension platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating decision making regarding extensions of credit is shown. In this regard, the credit extension platform 50 may be configured to perform analysis, modeling, or other determinations based on the signaling and/or the information provided to determine whether a financial transaction or loan can be underwritten according to a selected type of financing option (e.g., a buy now, pay later loan) and, if so, what financing offers to extend to the user receiving an affirmative result in such determinations. The apparatus may be an embodiment of the credit extension platform 50 or a device or component thereof including, for example, credit decision module 80. As such, configuration of the apparatus as described herein may transform the apparatus into the credit extension platform 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30). Thus, in some cases, the connection of the user to the user interface 110 may actually occur via the network 30.

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located. In some cases, the user interface 110 may be located at one of the clients 20 of FIG. 1.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly.Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control credit decision module 80, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the credit decision module 80 as described below.

The credit decision module 80 may be configured to include tools to facilitate execution of a transactional-based credit extension decision based on a financing option decision model 82. The tools may be provided in the form of various modules (or submodules) that may be instantiated by configuration of the processing circuitry 100. The financing option decision model 82 may include tables, algorithms and/or the like that define decision making parameters based on the inputs provided thereto. The inputs may include many different signals that may be used to balance risks associated with extending credit to a user (or a device from which a credit extension request is received that purports to be associated with the user). These signals typically include identity information indicating an identity of the user, and other information enabling a check of a credit score of the user, information descriptive of the transaction itself or items (e.g., a stock-keeping unit (SKU) or other code used to track products at the individual product level), price and other parameters associated with the transaction. However, numerous other signals may also be included that may be used to detect fraud or confirm various aspects of the information noted above or other information that may be useful in making credit extension decisions. The other signals may include information associated with the current and past transactions between the user and the entity that operates the credit extension platform 50 and/or any other relationship or other information that may inform the decision making process for selecting the form and structure of the financing offers. In this regard, for example, information indicative of most likely preferred options for the user (which may be learned by the machine learning component) may be used. The financing option decision model 82 may also include tables, algorithms and/or the like that enable computation (by the credit decision module 80) of a credit limit that is suggested for the user and/or specific financing offers (e.g., including a term or details regarding the number, size and pace of repayments that are to be made) based on all of the other inputs received. The credit limit given (or suggested) and/or the financing offers made by the credit decision module 80 may therefore be made based on live signaling and the financing option decision model 82.

In an example embodiment, the tables of the financing option decision model 82 may include a merchant listing, which may indicate a list of merchants (or merchant types) for which a corresponding pre-authorized credit limit is approved. The pre-authorized credit limit may correspond to a prior agreement or partnership in the case of certain merchants with which the entity associated with the system 10 has a prior relationship. These merchants, which may be referred to as partner merchants, may be willing to take on the risk of extending credit to drive sales, and may therefore pre-authorize certain customers (or all customers) for a line of credit of a corresponding amount. The entity associated with the system 10 may, for other merchants (e.g., non-partner merchants) define a class-wide credit limit for customers (or sub-sets of customers segregated by credit rating). In any case, the credit decision module 80 may be configured to determine, based on merchant identity or type, and in some cases also based on the creditworthiness of the customer 21 or other identifying information about the customer 21, a pre-authorized or approved financing offer 84, which may be communicated to the customer 21 (e.g., via the client application 22). The approved financing offer 84 may then be reviewed and accepted by the customer 21 through an exchange of information between the client application 22 and the credit extension platform 50.

In this regard, for example, the approved financing offer 84 may be accepted (e.g., after a review of disclosures and acceptance of terms), and a user account 86 may be created for the customer 21. In some cases, the customer 21 may already have a user account 86, in which case the customer 21 may simply log in or authenticate within the system to access and utilize the approved financing offer 84. In an example embodiment, a virtual card 88 may be generated and communicated to the client application 22 (e.g., via the browser extension) for use by the customer 21 in purchasing goods or services from the merchant 23. The creation of the user account 86 may require submission (or confirmation) of information such as the name of the individual associated with the customer 21, billing address, account information for checking, savings or other accounts from which payments may be extracted. Meanwhile, the virtual card 88 may include an account number (which may be associated with the user account 86), name information, an expiration date, credit verification value (CCV) number and any other details required to generate a functional credit instrument that can be used to make purchases for which the funds advanced to finance the purchases become the subject of a buy now, pay later loan (or other loan) between the individual associated with the customer 21 and the entity associated with the system 10. The financing offer 84, and the virtual card 88 may be communicated to the customer 21 via the network 30. Moreover, communications from the customer 21 to facilitate any of the operations described above may also occur via the network 30.

In an example embodiment, the virtual card 88 may be associated with a single transaction (which may include one or more products) with the merchant 23. A loan (e.g., a buy now, pay later loan) may be originated to secure funds transfer to the merchant 23 from the entity associated with the system 10 for the single transaction, with loan terms corresponding to the financing offer 84 when the virtual card 88 is used at checkout to obtain goods or services. Thus, in some cases, the virtual card 88 may be itself unique to the single transaction. However, in other cases, the virtual card 88 may be reused for multiple transactions with potentially multiple different merchants. In such cases, the same virtual card 88 may be used, but the transaction may be tracked separately, and a separate loan may be generated for the new transaction. Thus, the virtual card 88 may, instead of being issued as an original card, be updated to track a different transaction in association with the virtual card 88 so that the different transaction generates a different loan. However, the customer 21 may, in some cases, be enabled to consolidate loans into a single updated loan with corresponding updated loan terms, payment amounts and payment dates. In such cases, the client application 22 may interact with the credit extension platform 50 to manage such consolidation and handle communications associated with disclosing terms and receiving acceptance from the customer 21.

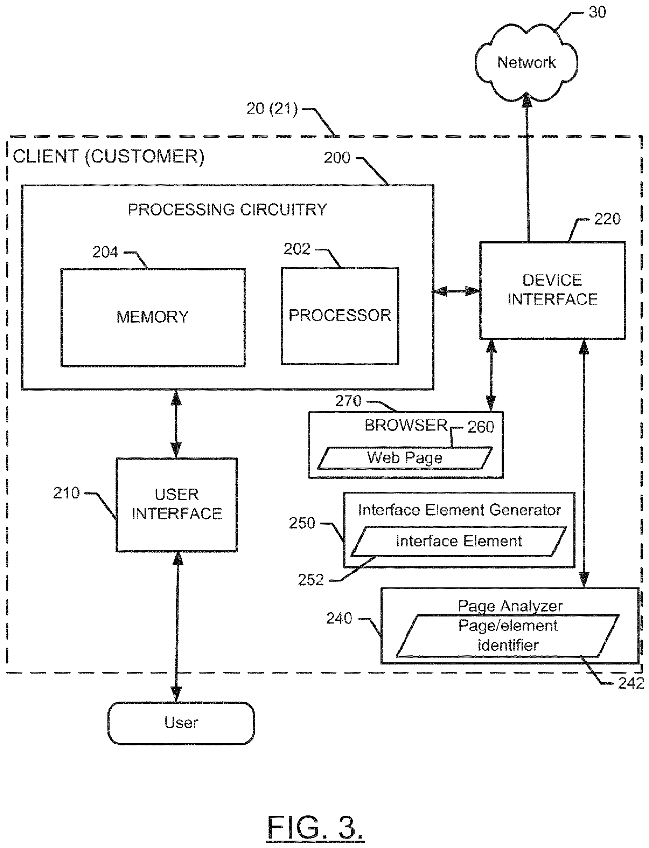

FIG. 3 is a block diagram of control circuitry associated with operation of the browser extension (e.g., the client application 22) at one of the clients 20 (e.g., the customer 21). The client 20 may include processing circuitry 200 that is similar in function (and in some cases also form) to the processing circuitry 100 described above. Thus, the processing circuitry 200 may include a storage device (e.g., memory 204) and a processor 202 that may be in communication with or otherwise control a user interface 210 and a device interface 220 that may each be similar in function (and in some cases form) to the example memory 104, processor 102, user interface 110 and device interface 120 described above. Thus, a repeat of the descriptions of such elements will not be repeated. The client 20 may also include the browser extension 230, which may include source code enabling the browser extension 230 to perform web page object analysis (e.g., via page analyzer 240) and provision of interface elements into web pages that have been analyzed (e.g., via interface element generator 250) on one or more instances of a web page 260 generated via browser 270.

In an example embodiment, the page analyzer 240 may be configured to analyze the web page 260 that is loaded by the browser 270. The page analyzer 240 may be configured to determine or identify elements within the web page 260. Based on the determination of the identity of the elements of a currently loaded web page, the interface element generator 250 may then generate an interface element 252 that is to be added to the web page 260 as described in greater detail below.

In some embodiments, the page analyzer 240 may be configured to examine a uniform resource locator (URL) associated with the web page 260 and determine a corresponding type classification for the web page 260. For example, the page analyzer 240 may be configured to determine whether the web page 260 is a search page, a checkout page, or another type of web page associated with a particular merchant or vendor (e.g., a product description page associated with a particular product that may be identified by a SKU). The search page classification may, in some cases, be made based on the URL itself. For example, a URL associated with Bing, Google or other search engines may indicate that the web page 260 is likely a search page. Meanwhile, the checkout page or product description pages may be determined by examining a corresponding document object model (DOM) and/or individual fields or elements of the web page 260 to determine their respective contents, function, or origin

Thus, for example, the page analyzer 240 may also be configured to determine an identity or function of specific elements or objects within the web page 260. In this regard, for example, the page analyzer 240 may examine fields or objects within the web page 260 to determine type or content information regarding such fields or objects. As an example, the contents of the web page 260 may include text comprising the word "checkout," which may be used to infer that the web page 260 is a checkout page. Alternatively or additionally, objects within the web page 260 may include fields for entry of payment information, which may also be recognized as corresponding to a checkout page. Other cues and clues may also be used or inferred, and the page analyzer 240 may correspondingly be programmed to employ such cues or clues to determine the type classification of the web page 260 and/or the type or identity of the objects or elements within the web page 260. Although not required, in some cases, the page analyzer 240 may generate a page/element identifier 242 to indicate a type classification for the web page 260, or information identifying specific objects or elements within the web page 260 for provision to the interface element generator 250 to enable the interface element generator 250 to generate the interface element 252 for inclusion in the web page 260 as described in greater detail below.

In an example embodiment, the interface element generator 250 may be configured to receive information (e.g., the page/element identifier 242) indicating the type classification for the web page 260 and/or information identifying specific objects or elements within the web page 260. The interface element generator 250 may then generate the interface element 252 based on the determined type classification for the web page 260 or information identifying specific objects or elements within the web page 260, and based on the financing offer 84 received from the credit decision module 80. The interface element generator 250 may then insert the interface element 252 into a selected location on the web page 260. For example, the interface element 252 may be superimposed on top of the web page 260, or a portion thereof. In some cases, the interface element 252 may be inserted proximate to, or in specific locations relative to, the identified specific objects or elements within the web page 260. Moreover, in some embodiments, the interface element 252 may be sized, styled and/or located proximate to other identified objects to match with or otherwise integrate the interface element 252 into a series of similar objects as described in greater detail below.

The interface element 252 may, in some cases, be one of multiple interface elements 252 that may be presented on the same single instance of the web page 260. However, in some cases, where a sequence of web pages are presented, some such pages may include no interface elements whereas others may include one or more depending on the type classification of the web page 260 and perhaps also on the objects or elements in the web page 260. In some examples, the interface element 252 may be informational in nature only. In other words, the interface element 252 may not be selectable, or provide a link to any other function or web page. However, in some examples, the interface element 252 may itself be functional, and may include a link to a corresponding web page or console, or may execute source code to perform a corresponding function.

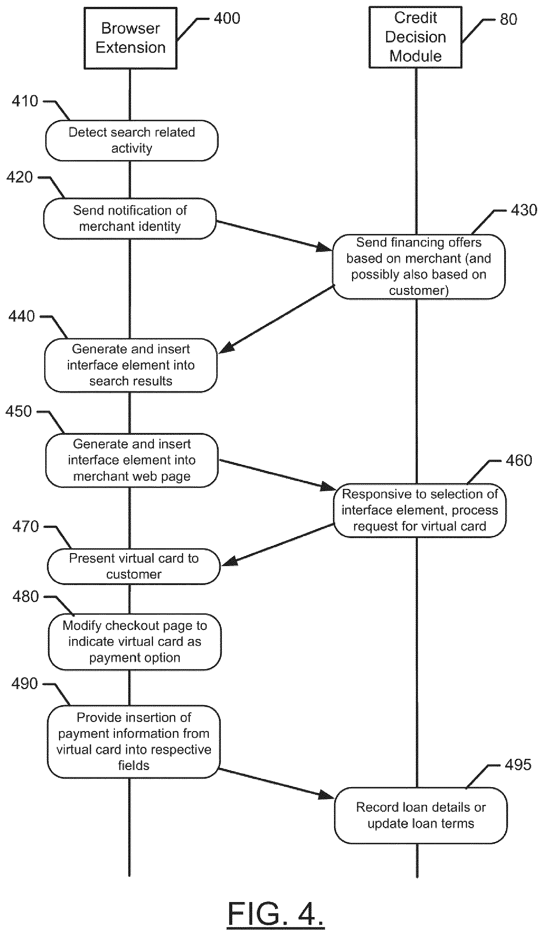

FIG. 4 illustrates an example control flow diagram of an example embodiment. As shown in FIG. 4, browser extension 400 (e.g., an example of the client application 22) may detect (e.g., via page analyzer 240) that a URL for a search for a product has been generated (e.g., by browser 270) at operation 410. The results of the search may be provided to be displayed on a web page and the results may correspond to a product that was the subject of the search. The results may include models or instances of the product that are produced by various different merchants. The browser extension 400 may then either interface with the credit decision module 80 in real time, or rely on stored information received from the credit decision module 80, to access one or more financing offers that may be associated with one or more of the different merchants. For example, the browser extension 400 may notify the credit decision module 80 of an identity of one or more merchants at operation 420. The credit decision module 80 may respond with one or more financing offers associated with the merchants at operation 430. At operation 440, the browser extension 400 may generate and insert an interface element (e.g., interface element 252) into the results of the search in association with individual products or merchants. In an example embodiment, the interface element may be non-functional, but may inform the customer 21 of the fact that a financing offer is associated with the merchant. In some cases, the interface element may be an "as low as" informational element that informs the customer 21 of the monthly payment that may be secured in a buy now, pay later or other loan that can be obtained with the entity associated with the system 10.

Operations 410 to 440 may therefore provide a stand-alone example of how the browser extension 400 may enhance search results. In the example indicated, communications are executed (e.g., via the network 30) between the browser extension 400 and the credit extension platform 50 to determine merchant specific credit authorizations, and calculate payment values accordingly. However, it is not necessary for such communications to occur during the process as shown in FIG. 4. In some cases, the browser extension 400 may have access to locally stored information about preapprovals for different vendors, so that network communication on that subject need not be performed before interface elements can be generated into search results, and the browser extension 400 may also be enabled to calculate and present a payment schedule and monthly payment amounts.

If the customer 21 or user selects one of the search results, the customer 21 may be directed to the website (and corresponding web pages) of the merchant 23 of the selected search result. The browser extension 400 may insert one or more interface elements into some of the web pages encountered at the website of the merchant 23 at operation 450. These interface elements could be "as low as" informational elements, as noted above. However, in some cases, these interface elements could further be functional and selectable so that the customer 21 may review and accept the terms of the financing offer to create or access the user account 86 and have the virtual card 88 issued or updated. If one of the functional and selectable interface elements is selected by the customer 21 at operation 460, the browser extension 400 may initiate communications with the credit decision module 80 to request or update the virtual card 88. The virtual card 88 may then be provided at operation 470. When at the checkout page, the same interface elements noted above could be presented (e.g., if the customer 21 has not yet accepted the financing offer). Selection of the same interface elements from the checkout page would result in the same communications of operations 460 and 470 above to issue the virtual card 88. However, at the checkout page, some other information elements may also be generated by the browser extension 400. For example, a payment method indicator may be presented to demonstrate that (if not previously listed as an option), the entity associated with the system is an available payment option for checking out at operation 480. Meanwhile, if the customer 21 is at checkout and is presented with fields associated with inserting payment information, the interface element presented may cause the fields to be filled with information associated with the virtual card 88 at operation 490. Thereafter, information may be provided to the credit decision module 80 to update loan terms at operation 495.

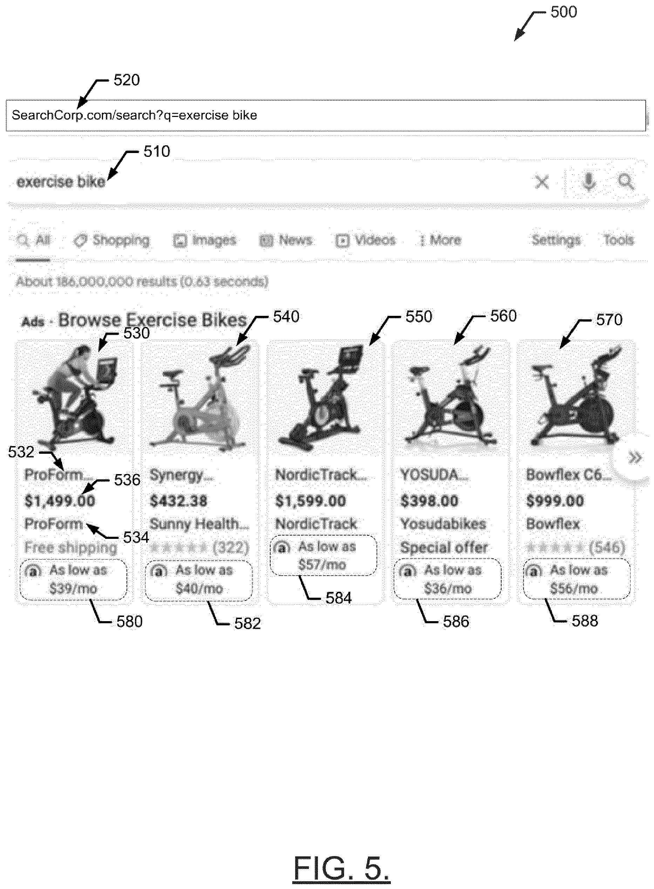

FIG. 5 illustrates a web page 500 showing search results modified to include an interface element in accordance with an example embodiment. In this regard, a search term 510 was entered by the user into a search field of a search engine and the web page 500 illustrates the results returned responsive to entry of the search term 510. The browser extension (e.g., browser extension 400) may determine that the web page 500 is a search page via operation of the page analyzer 240 described above. As an example, the page analyzer 240 may examine the URL 520 to determine that the URL 520 corresponds to a search engine address, and is formatted to provide search results. However, the page analyzer 240 may also or alternatively examine objects within web page 500 and characterize such objects as individual respective search results. The page analyzer 240 may also be configured to extract, from the search results, information indicative of the merchant that corresponds to the product or service associated with each individual search result, and/or information indicative of the price associated with the product or services displayed.

As an example, a series of search results (first result 530, second result 540, third result 550, fourth result 560 and fifth result 570) are displayed in FIG. 5. Each of the products (e.g., exercise bikes) in the search results may have, as shown in detail in relation to the first result 530), a corresponding product descriptor 532, merchant identity 534, and price 536. The browser extension 400 may be configured to utilize the merchant identity 534 to determine a financing offer that is associated with the merchant. In some embodiments, the browser extension 400 may locally access stored information on the customer 21, or may access such information via communication with the credit extension platform 50. Such information may correlate specific merchant identities to corresponding preapproved or preauthorized financing offer amount that can be offered for each respective merchant. In some cases, the entity may provide a base financing offer amount that is determined for all customers (on an individual basis, or based on credit scores, etc.). Meanwhile, individual merchants may partner with the entity and offer (e.g., as an incentive) higher financing offer amounts to certain or all customers. In any case, the browser extension 400 may determine the financing offer amount that corresponds to the individual merchants and/or customers.

To the extent the price 536 is below the financing offer amount that is preapproved for the corresponding merchant, the browser extension 400 (e.g., either using local resources, or via communication with the credit extension platform 50) may utilize the price 536 as a reference for determining a payment that may be correlated to a buy now, pay later (e.g., installment) loan that can be obtained by utilizing the financing offer. The number of payments, and corresponding monthly amount may be calculated using rules that relate the loan amount to a length of loan that can be offered for the loan amount. The browser extension 400 may thereafter generate an interface element 580 that demonstrates to the customer 21 that the corresponding search result (e.g., first result 530) can be purchased using the financing offer. Thus, the interface element 580 may be a message that indicates that the payment amount may be as low as a given value that corresponds directly to the first result 530. Meanwhile, a second interface element 582 may be a message that indicates the "as low as" payment amount for the second result 540, a third interface element 584 may be a message that indicates the "as low as" payment amount for the third result 550, a fourth interface element 586 may be a message that indicates the "as low as" payment amount for the fourth result 560 and a fifth interface element 588 may be a message that indicates the "as low as" payment amount for the fifth result 570.

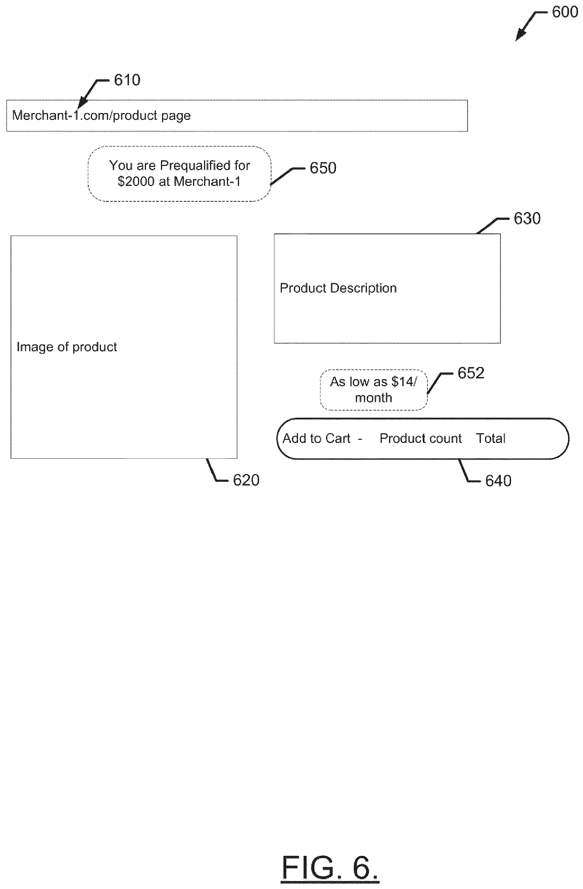

If the user selects any one of the first result 530, second result 540, third result 550, fourth result 560 and fifth result 570, the browser (e.g., browser 270) may proceed to a website of the merchant listed as the merchant identity. More specifically, the website may have a series of web pages, and the user may proceed to a web page that corresponds to the product represented in the search result. FIG. 6 illustrates a web page 600 corresponding to a product offered by a merchant and modified by operation of the browser extension 400 in accordance with an example embodiment. The URL 610 of the web page 600 may be analyzed (e.g., by the page analyzer 240) to determine the merchant identity. As noted above, the page analyzer 240 may also be capable of detecting other objects and fields in the web page 600. For example, a product image 620, product description 630 and cart selection or purchasing interface element 640 may each correspond to objects within the web page 600 that can be detected and classified by the page analyzer 240. The browser extension 400 may, based on the financing offer amount determined for the merchant, present an interface element 650 that provides a message to the customer 21 to indicate the financing offer, and the amount for which the user associated with the customer 21 is prequalified. Additionally or alternatively, a message 652 similar to that shown on the search results may be provided via an informational interface element (i.e., similar to interface element 580).

The interface 650 may be selectable by the user to link to the credit extension platform 50 to review loan terms, disclosures, etc., and accept the financing offer. Acceptance of the financing offer may include setting up a user account as described above. Alternatively, if the customer 21 is already in possession of a user account, the user account may be linked to the financing offer by the user associated with the customer 21 logging in and authenticating himself/herself. In an example embodiment, once the financing offer is accepted, the virtual card 88 may be issued. When the user proceeds to the checkout page, and on the way to the checkout page, the browser extension 400 may provide yet further modifications to the web pages and interfaces provided thereon.

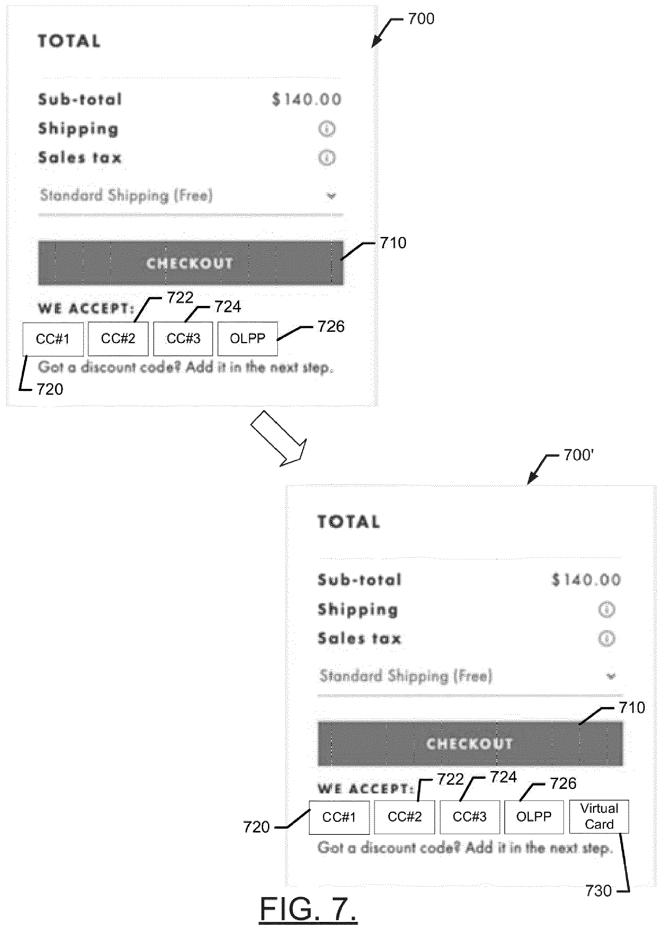

As one such example, FIG. 7 illustrates a modification of a control console 700 or interface that may lead to a checkout page in accordance with an example embodiment. In this regard, for example, the control console 700 may include a checkout button 710. The page analyzer 240 may be enabled to classify the object associated with the checkout button 710 accordingly in order to determine that selection thereof will cause the customer 21 to proceed to a next page, which is a checkout page. In many cases, the control console 700 may include an indication of the payment methods that are acceptable at checkout. In the example of FIG. 7, the control console 700 may depict icons that correspond to different payment methods that are accepted at checkout. A first icon 720 may correspond to a first credit card type (or company), a second icon 722 may correspond to a second credit card type (or company), a third icon 724 may correspond to a third credit card type (or company), and a fourth icon 726 may correspond to an online payment platform (e.g., PayPal) Other payment options may also be possible, and may be depicted in alternative embodiments.

The issuance of the virtual card 88 may enable the entity associated with the system 10 to be yet another payment option or source that will be accepted. However, since the branding or identity of the entity may otherwise be lacking in the list of accepted payment methods or payment sources, the customer 21 may be confused, and may not use the virtual card 88. To avoid this confusion, the browser extension 400 may be configured to insert an icon or other interface element to indicate that the virtual card 88 is also an acceptable payment method. Accordingly, control console 700' is shown with a modification made to superimpose virtual card icon 730 into the list of accepted payment sources. In some cases, the first, second, third and fourth icons 720, 722, 724 and 726 may each be conformed to a consistent format (e.g., in terms of size, shape, etc.). The page analyzer 240 may be configured to classify the objects associated with the first, second, third and fourth icons 720, 722, 724 and 726 as indicators of accepted payment sources, and may further analyze the format of the icons. The interface element generator 250 may then generate the virtual card icon 730 to have the same or similar formatting to that of the first, second, third and fourth icons 720, 722, 724 and 726. The virtual card icon 730 may also be placed proximate to a last one (i.e., the fourth icon 726) in the series of icons. Thus, the interface element generator 250 may enable the provision of interface elements in the form of messages (selectable or purely informational), buttons and/or the like, and may also superimpose or otherwise insert the interface elements into selected locations on web pages. For example, the interface elements may be located proximate to (e.g., above, below, or alongside) other objects with which the interface elements are associated, or may be provided in a clear or otherwise empty space to avoid interference with other content on the web page.

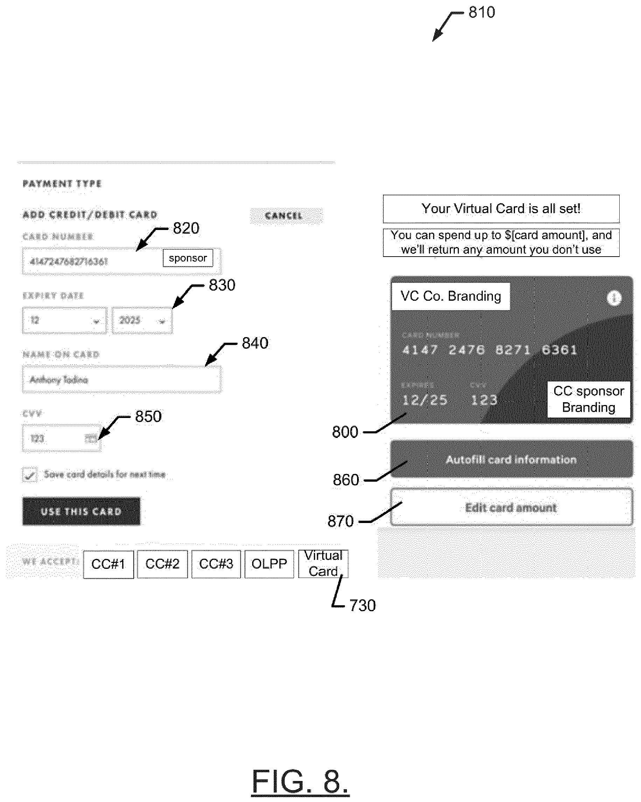

After the user proceeds to the checkout page, which may be detected by the page analyzer 240 as noted above, further modifications may be instantiated by the browser extension 400 and/or additional functionality may be provided. In this regard, FIG. 8 illustrates a virtual card 800 and usage of the virtual card 800 at a checkout page 810 in accordance with an example embodiment. As shown in FIG. 8, the virtual card 800 may be a digital representation of a physical credit card, and may be structured in similar fashion such that, for example, the making of an online purchase using the virtual card 800 may be accomplished in similar fashion to the use of a credit card for the same purpose. Thus, the virtual card 800 may include a card number, expiration, CVV, and any other needed properties that are provided on a conventional credit card.

In an example embodiment, another interface element 860 may be provided with functionality that, when selected, enables the details of the virtual card 800 to be deposited in corresponding fields for credit card payment via the checkout page 810. Thus, for example, the card number of the virtual card 800 may be inserted into the card number field 820, expiration date information may be inserted into the card expiry date field 830, a name of the user associated with the user account may be inserted into the name on card field 840, and the CVV may be inserted into the CVV field 850. For consistency, the virtual card icon 730 may also be included on the checkout page 810 with other accepted payment sources.

In some embodiments, the virtual card 800 may be designated for a single use only (i.e., usage for one purchasing transaction). A different virtual card may then be issued for any subsequent transaction (i.e., with the same or a different merchant). However, in other cases, the virtual card 800 may be usable with multiple merchants, or for multiple transactions with one or multiple merchants. As such, an option for editing the virtual card may be provided via interface element 870. By selecting the interface element 870, the user may be enabled to interact with the user account 86 to modify (e.g., increase) the available credit for the virtual card 800, authorize use for additional transactions, additional vendors, etc. The modifications may be subject to additional underwriting scrutiny by the credit extension platform 50.

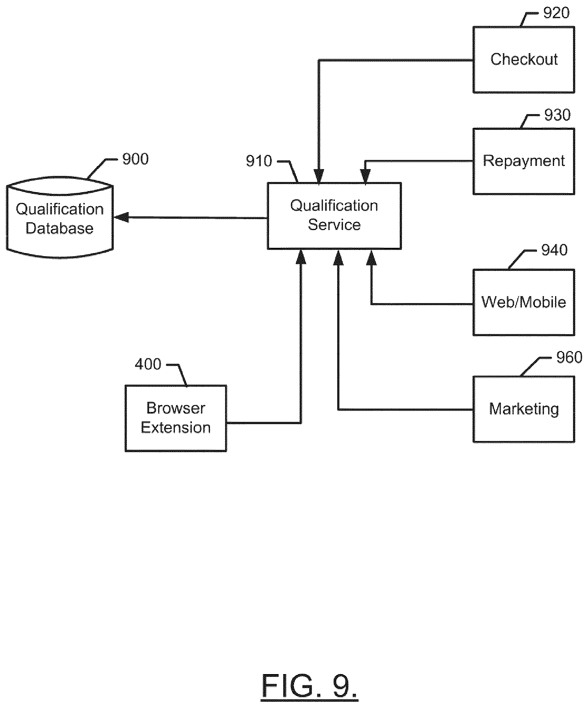

The control flow of FIG. 4 and the hardware described in reference to FIGS. 2 and 3 are merely examples of control flows and hardware that could be employed to implement example embodiments. Moreover, in some cases, various services or systems may cooperate to practice example embodiments, and different combinations of hardware and software may be employed to implement such services and systems. For example, an application (e.g., another client application 22) at the client 20 or customer 21 may be used to manage the user account 86. The functionality of the browser extension 400 may therefore be integrated into a larger system of which a web application for interaction with the user account is a part. FIG. 9 is a block diagram of various systems interactions that may be employed to implement a capability for integration of the browser extension 400 with a web/mobile application 940 in accordance with an example embodiment.

As shown in FIG. 4, a qualification database 900 may store information associated with qualification (e.g., prequalification for existing user accounts, or qualification at checkout by setting up the user account 86 before or during transaction processing) of a plurality of users, each having a corresponding user account setup and maintained as described above. In an example embodiment, the qualification database 900 may be a portion of the database server 44 of FIG. 1, or implemented in memory 104/204 of FIG. 2/3. The qualification database 900 may also store information associated with prior transactions for the users, vendors, products, etc., to enable machine learning to be conducted with respect to such information. A qualification service 910 may interface with and update the qualification database 900. The qualification service 910 may be implemented from the credit extension platform 50.

Checkout information may be provided to the qualification service 910 by various checkout systems 920 associated with respective different vendors or websites. Repayment information may also be provided to the qualification service 910 by various repayment systems 930 associated with respective different vendors or websites. Web or mobile applications 940 may be executed on examples of clients 20 that may interact with the qualification service 910 to setup user accounts and to initiate transactions (via the checkout systems 920) or make payments (via the repayment systems 930). The qualification service 910 may handle all operations associated with a prequalification phase described above and based on underwriting decisions and merchant-based financing offers.

The qualification service 910 may be employed to make credit extension decisions described above. In some cases, the qualification service 910 may augment (or boost) credit limits based on machine learning, or based on merchant incentives. In some cases, the machine learning may be performed with respect to marketing information from a marketing system 960. Thus, for example, targeted promotions may be provided to selected users via cooperation of the marketing system 960 and the web or mobile application 940. Promotions, rebate offers, sale pricing and other marketing efforts may therefore be incorporated into the checkout processes using the browser extension 400 functions described above. Favorited items, or other behaviors exhibited by users that may show high interest in an item (or conversely activities that show low interest) may therefore be implemented to improve the quality of financing offers to potentially provide incentives for buying to the user. The user may therefore be informed of price drops on items on a wish list, sale items, etc. Merchant incentives may also be provided. Machine learning may also (e.g., based on past knowledge of user behavior or tendencies) provide a structure and form for financing offers that are targeted to the user. For example, if it is known (or can be learned through repeated interactions) that the user favors low interest options, no interest options, short or long terms, or other specific traits of financing offers that the user qualifies to receive, the qualification service 910 may tailor a smaller list of options to the user where the favored options are prominently (or only) displayed. In other words, personalized terms may be provided to users for the financing offers they receive.

As can be appreciated from the description above, the user may be allowed to interact with merchants and receive financing offers based on merchant identity for searches and on the way to checkout. By engaging customers in such an integrated fashion, and sometimes also by employing machine learning techniques described above, the form and structure of financing offerings (as well as the content thereof) may be tailored to the user, to incentivize the user to utilize available credit options that are associated with the specific merchants that have products/services desired by the user. The corresponding incentives and immediately perceptible increased flexibility for the user may ultimately provide a technical means by which to create a win/win relationship between the entity and the user.

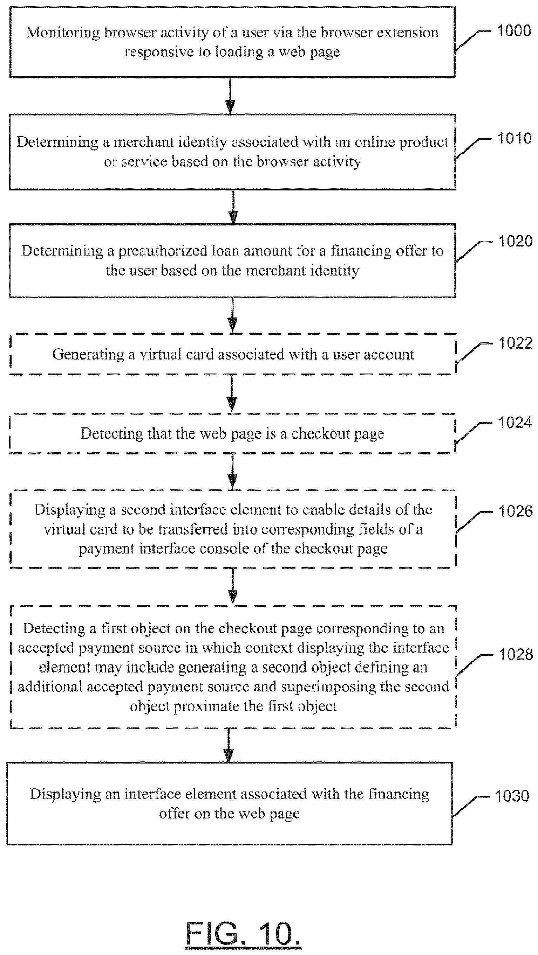

From a technical perspective, the credit extension platform 50 and/or the browser extension 400 described above may be used to support some or all of the operations described above. As such, the apparatuses described in FIGS. 2 and 3 may be used to facilitate the implementation of several computer program and/or network communication based interactions. As an example, FIG. 10 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of for employing a browser extension in relation to extending a financing offer to a user according to one embodiment of the invention is shown in FIG. 10. The method may include monitoring browser activity of a user via the browser extension responsive to loading a web page at operation 1000. The method may further include determining a merchant identity associated with an online product or service based on the browser activity at operation 1010 and determining a preauthorized loan amount for the financing offer to the user based on the merchant identity at operation 1020. The method may also include displaying an interface element associated with the financing offer on the web page at operation 1030.

In an example embodiment, an apparatus for performing the method of FIG. 10 above may comprise a processor (e.g., the processor 102) or processing circuitry configured to perform some or each of the operations (1000-1030) described above. The processor may, for example, be configured to perform the operations (1000-1030) by performing hardware implemented logical functions, executing stored instructions, or executing algorithms for performing each of the operations. In some embodiments, the processor or processing circuitry may be further configured for additional operations or optional modifications to operations 1000 to 1030.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include optional operations (shown in dashed lines in FIG. 10) such as, generating a virtual card associated with a user account at operation 1022 and, when used for payment at checkout to purchase the product or service, the amount of the payment may be established as an installment loan associated with the user account according to terms of the financing offer. In an example embodiment, the method may further include detecting that the web page is a checkout page at operation 1024. In such context, the method may further include displaying a second interface element to enable details of the virtual card to be transferred into corresponding fields of a payment interface console of the checkout page at operation 1026, or detecting a first object on the checkout page corresponding to an accepted payment source, in which context displaying the interface element may include generating a second object defining an additional accepted payment source and superimposing the second object proximate the first object at operation 1028. As an alternative to the virtual card, as noted above, an alternative purchasing vehicle and corresponding API may be employed for one-click checkout of the customer. In an example embodiment, the browser activity may be a search activity. In such context, determining the merchant identity may include determining a corresponding merchant identity for each respective search result generated responsive to conducting the search activity, and displaying the interface element may include displaying the interface element proximate to at least one search result. In an example embodiment, determining the preauthorized loan amount may include referencing a table of merchant identities and corresponding loan amounts assigned to each of the merchant identities. In some cases, displaying the interface element may include displaying a message indicating the preauthorized loan amount of the financing offer via the browser extension. In an example embodiment, displaying the interface element may include displaying a message indicating a proposed installment loan payment amount corresponding to a cost of the product or service. In some cases, displaying the interface element may include displaying a message indicating a proposed installment loan payment amount corresponding to the preauthorized loan amount. In an example embodiment, displaying the interface element may include displaying a selectable link to enable the user to accept the financing offer and setup or link the financing offer to a user account.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for employing a browser extension in relation to extending a financing offer to a user, the method comprising:
monitoring browser activity of a user via the browser extension responsive to loading a web page;
determining a merchant identity associated with an online product or service based on the browser activity;
determining a preauthorized loan amount for the financing offer to the user based on the merchant identity; and
displaying an interface element associated with the financing offer on the web page.

2. The method of claim 1, wherein the browser activity comprises a search activity, wherein determining the merchant identity comprises determining a corresponding merchant identity for each respective search result generated responsive to conducting the search activity, and
wherein displaying the interface element comprises displaying the interface element proximate to at least one search result.

3. The method of claim 1, wherein determining the preauthorized loan amount comprises referencing a table of merchant identities and corresponding loan amounts assigned to each of the merchant identities.

4. The method of claim 1, wherein displaying the interface element comprises displaying a message indicating the preauthorized loan amount of the financing offer via the browser extension.

5. The method of claim 1, wherein displaying the interface element comprises displaying a message indicating a proposed installment loan payment amount corresponding to a cost of the product or service.

6. The method of claim 1, wherein displaying the interface element comprises displaying a message indicating a proposed installment loan payment amount corresponding to the preauthorized loan amount.

7. The method of claim 1, wherein displaying the interface element comprises displaying a selectable link to enable the user to accept the financing offer and setup or link the financing offer to a user account.

8. The method of claim 7, further comprising generating a virtual card associated with the user account and, when used for payment at checkout to purchase the product or service, the amount of the payment is established as an installment loan associated with the user account according to terms of the financing offer.

9. The method of claim 8, further comprising detecting that the web page is a checkout page and displaying a second interface element to enable details of the virtual card to be transferred into corresponding fields of a payment interface console of the checkout page.

10. The method of claim 1, further comprising detecting that the web page is a checkout page and detecting a first object on the checkout page corresponding to an accepted payment source,
wherein displaying the interface element comprises generating a second object defining an additional accepted payment source and superimposing the second object proximate the first object.

11. An apparatus for employing adaptive credit decisions in relation to extension of a loan to a user, the apparatus comprising processing circuitry configured to perform the method of any of claims 1-10.
